# EUROPEAN PATENT SPECIFICATION

(11) **EP 2 523 322 B1**
(45) Date of publication and mention of the grant of the patent: **05.04.2017**
(21) Application number: 12166285.2
(22) Date of filing: 01.05.2012
(51) Int. Cl.: H02K 55/04, H02K 3/28, H02K 19/36, H02K 3/02, H02K 13/02, H02K 17/30

(54) **Superconducting electrical machine**
Supraleitende elektrische Maschine
Machine électrique supraconductrice

(30) Priority: 12.05.2011 GB 201107888
(43) Date of publication of application: 14.11.2012
(73) Proprietor: Rolls-Royce plc, London SW1E 6AT (GB)
(72) Inventor: Cullen, John James Anthony, Derby, DE73 6WP (GB); Hirst, Michael Peter, Derby, DE73 5WE (GB)
(74) Representative: Rolls-Royce plc

(56) References cited:
- US-A- 4 237 507
- US-A1- 2011 084 566

## Description

Superconducting machines rely upon their superconducting field winding (usually supplied with current through a slip-ring system) remaining superconducting at all times. In the event that the superconducting winding cannot be maintained in the superconducting state (e.g. due to a loss of coolant or damage to the superconductor itself) then the current-carrying capability of the superconductor is greatly reduced. In consequence the machine has little or no electromagnetic torque-generating capability. So, for example, a ship's electric propulsion motor will no longer be able to rotate the propeller shaft. Furthermore, the superconducting system takes typically several days to warm up to ambient temperature, as it needs to do before a repair to the superconductor system can be effected. It is an aim of the invention to address these problems.

Document US 2011/084566 A1 discloses an electrical machine comprising a rotor which has a superconducting winding.

According to a first aspect of the invention there is provided a superconducting electrical machine including a rotor and a stator, the rotor having electrically conductive windings at least one of which is superconducting in normal operation, in which the rotor includes an additional normally-conducting winding which is operable in a first, open-circuit, mode and a second, closed-circuit, mode whereby in the first mode the winding is not excited, and in the second mode the winding current sufficient to operate the machine can be passed through the additional winding if a fault occurs in the superconducting winding.

Embodiments of the invention provide a conventional (i.e. non-superconducting) winding in parallel with the superconducting winding such that if the superconducting winding cannot carry its rated current then the conventional winding carries some current. This current will probably be less than the superconductor's rated current, but it should be more than the latter's current in the faulted state. This measure gives both (i) "reversionary mode capability" - that is, the capacity for allowing the motor/propeller shaft to continue to turn, so the vessel can continue its journey, albeit at less than rated speed, and (ii) heating of the (inner) rotor, thereby warming the superconductor and cryogenic region of the rotor system more quickly; this reduces the delay before the superconductor or cryogenic system can be repaired.

The additional winding may be of conventional type, made for instance of copper. It is connected in parallel with the superconducting field winding and has dimensions suitable for providing a propulsive capability comparable to that of the superconductive winding. It may tolerate a current of perhaps 5-10% of the full rated current. When carrying a current it will also warm the rotor relatively quickly towards ambient temperature.

The additional winding can be wound in the same slots in the rotor as the superconducting winding; one can be wound on top of the other, or they can be wound at the same time for a virtually identical field distribution. In one embodiment the two windings can even be the same wire or cable; superconducting wire generally contains a quantity of normally conducting material such as copper, to be able to absorb the current arising from transient quenches in the superconductor. Thus, to provide the additional winding of the invention in an embodiment of this kind, there is provided a cable containing significantly more copper than the standard cable. Specifically, the additional winding can be in the form of normally-conducting material which surrounds at least one superconducting wire of the superconducting winding. The ratio of the normally conducting material to superconducting material in the cross section can be between approximately 20:1 and 200:1.

Superconducting machines usually have a so-called dump resistor aboard the rotor, in order to absorb the inductive energy of the superconducting winding in the event that the field current supply is disconnected from the rotor. With some of the variants of this invention no dump resistor is present, its function being performed by the additional parallel winding of the present invention.

The winding may be an induction cage. The induction cage may comprise axial bars and end rings, the end rings being in electrical contact with the bars in the second mode, and at least one of the end rings being out of electrical contact with the bars in the first mode.

According to a second aspect of the present invention there is provided a superconducting electrical machine including a rotor and a stator having stator windings, the rotor having an electrically conductive winding which is superconducting in normal operation, in which the rotor includes an induction cage which is operable in a first, open-circuit, mode and a second, closed-circuit, mode whereby current sufficient to operate the machine can flow within the induction cage in the second mode if a fault occurs in the superconducting winding.

According to a third aspect of the present invention there is provided a method of operating a superconducting electrical machine or motor according to the first or second aspect of the present invention, in which when a fault occurs, current is passed through the additional winding and operation of the machine is continued at reduced power.

For a better understanding of the invention, embodiments of it will now be described, by way of example, with reference to the accompanying drawings, in which:
- Figure 1: shows the main features of a typical electric machine with a superconducting rotor;
- Figure 2: shows a view along the axis of a typical rotor for a synchronous motor;
- Figure 3: shows the slip-ring concept;
- Figure 4: shows a conventional superconducting rotor circuit;
- Figure 5: shows a circuit diagram of a first embodiment of the invention;
- Figure 6: shows a modification of this embodiment;
- Figure 7: shows a further variant;
- Figure 8: shows another variant,
- Figure 9: shows a modification of the Figure 8 embodiment;
- Figure 10: shows a yet further variant;
- Figure 11: shows a brushless embodiment;
- Figure 12: shows a different embodiment using specially adapted superconducting cable; and
- Figure 13: shows another embodiment using an induction motor as the backup.

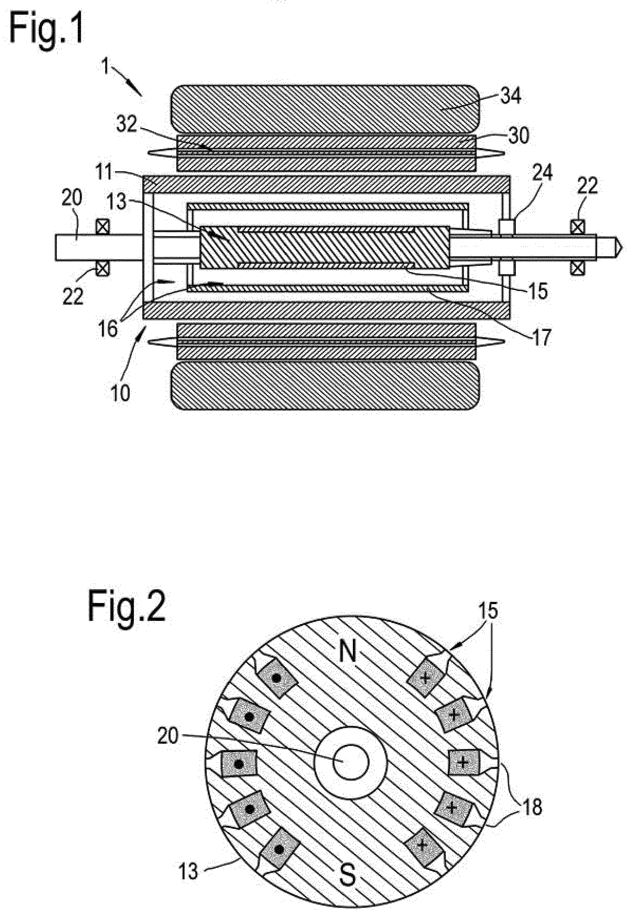

By way of background, some basic concepts will be set out with reference to Figures 1-4. Figure 1 (not to scale) shows the key components of a typical wound-field superconducting machine 1 having a three-part rotor 10 with inner rotor 13, radiation screen 17 and outer rotor 11. Some parts of the stator are also shown, namely an armature support structure 30, air gap windings 32 and an environmental protection screen 34.

The inner rotor 13 is driven by a shaft 20 mounted on bearings 22. A superconducting field winding 15 surrounds the inner rotor and is cooled by a cooling system which in the embodiment described is a cryogenic system. The inner rotor carrying the superconducting winding 15 is fed with cryogen along the axis. In order to reduce the ingress of heat to the superconductor, known as heat in-leak, the inner rotor 13 is surrounded by a region 16 which is maintained under vacuum. As a further measure to keep the rotor cold, a cylindrical radiation screen 17 located within the vacuum space surrounds the inner rotor 13. Seals 24 provide a hermetic seal between the outer rotor 11 and the shaft 20.

The DC current and the cryogenic fluid are supplied to the rotor along the machine's axis. The D.C. current supply to the superconductor winding is via conventional means in the form of slip rings which are not shown for the sake of clarity.

Figure 2 shows a radial section of the active 2-pole cylindrical region of a typical rotor comparable to the inner rotor 13 of Figure 1, for a synchronous motor with field coils 15 distributed in slots 18, five pairs in this case. DC current is shown coming out of the paper on the left-hand side and into the paper on the right. The five coils shown would normally be connected in series.

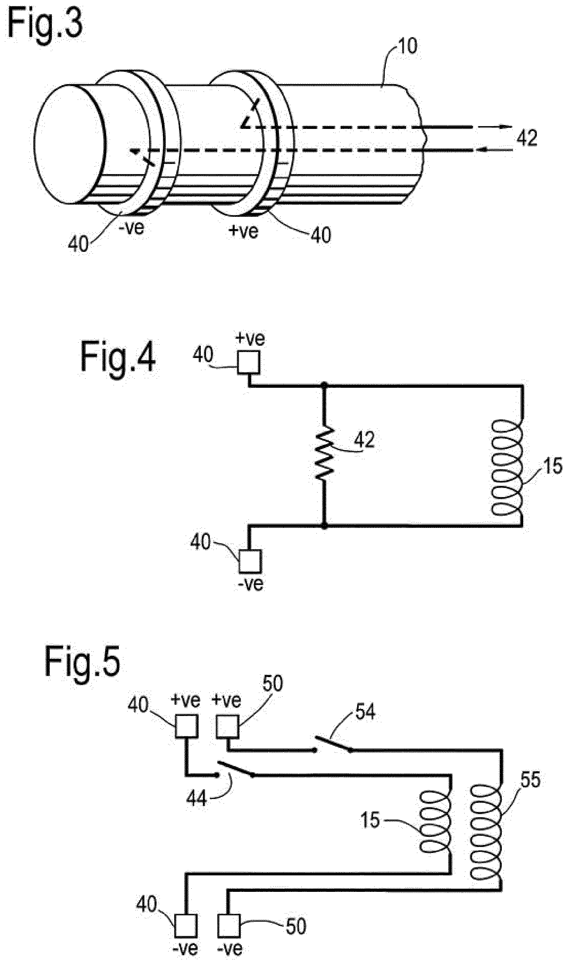

Figure 3 shows the slip-ring contact arrangement of a typical motor. Brushes, not shown, contact slip rings 40 at all times, one set of brushes per ring. The slip rings 40 will generally be mounted on the shaft 20 of the rotor, axially spaced from the main body of the rotor carrying the coil windings. Brushes and slip rings operate together to transfer current between stationary and rotating frames.

Figure 4 shows the usual superconducting rotor circuit. The two slip rings 40 are connected across the winding 15, with a dump resistor 42 in parallel. This resistor 42 absorbs magnetic energy stored in the superconducting winding, so that if the stator excitation system becomes disconnected from the slip rings (i.e. from the rotor) the energy can be dissipated. Such a dump resistor is normally present and in the following is assumed present unless otherwise stated.

A first embodiment of the invention is shown in Figure 5, which shows a superconducting machine having a backup facility or reversionary mode, for use if the superconducting system fails. It can be seen that, in parallel to the superconducting winding 15 (and a dump resistor if present) there is an additional, non-superconducting or "conventional" winding 55. This conventional winding is in close proximity to the superconducting winding - for instance, it can be wound alongside it in the same slots, as shown for example in Figure 2 - but is not connected electrically to the excitation (or any other electrical) system while the superconducting system is operating correctly.

In the event of a serious or permanent fault with the superconducting winding, it is disconnected from the excitation system and the conventional winding is connected in its place. This connection is made by way of a separate set of slip-rings 50. To transfer the connection, switches 44, 54 are present in the respective leads to the superconducting and normally conducting windings. When a fault is detected, the superconducting switch 44 is opened and the switch 54 leading to the normal winding 55 is closed. This switching can be done manually, when the fault is detected, or by way of a control system which monitors operation of the machine and operates the switches automatically on detection of a serious fault.

The brushes, which are in the stationary frame, will be moved from one set of slip rings 40 to the other 50 when the fault occurs. The switches are shown in the state they would be in before a fault in the superconducting winding or system, i.e. the switch 44 is closed and the switch 54 is open. After the fault, both switches change state. The switches could simply be connections between the winding leads and the slip rings that are made and un-made as required.

By this means the machine, which may be a propulsion motor for a vehicle such as a ship, remains available for use in the event of a failure of the main (i.e. superconducting) winding, particularly an electrical open circuit therein or a failure of the cooling system. Moreover, the warming effect of operating using the normally conducting winding reduces the "down time" required before one can effect a repair to the superconducting rotor system.

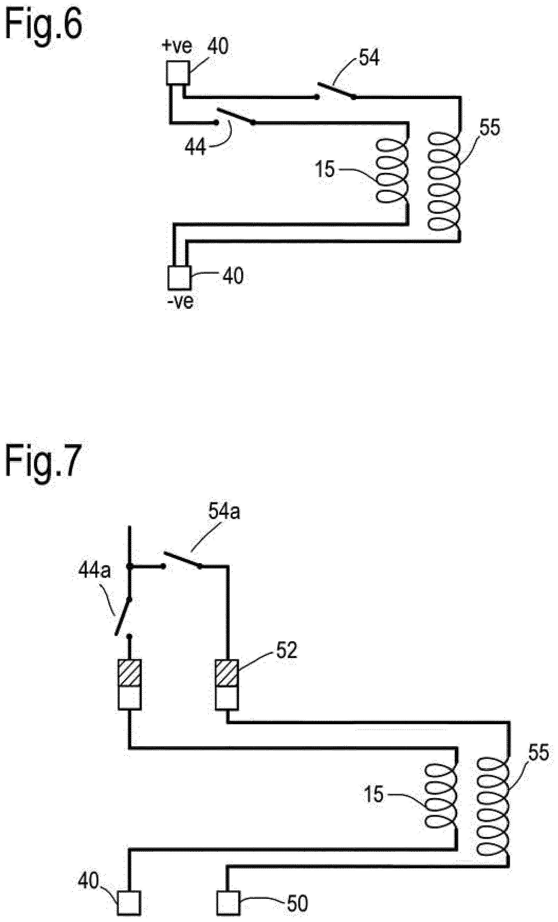

In the second embodiment, shown in Figure 6, there is only one set of slip-rings 40, and thus the brushes do not move from one slip ring set to the other.

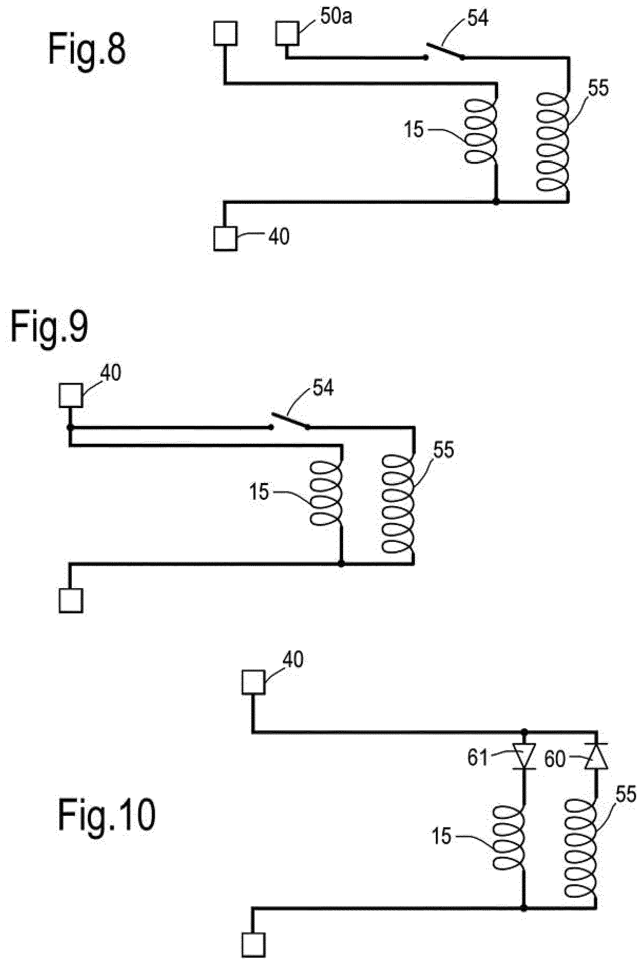

In the embodiments of Figures 5 and 6, the switches 44, 54 are close to the cryogenically cooled part of the apparatus (i.e. the inner rotor). This could make the switches difficult to operate. A way of avoiding this is shown in the embodiment of Figure 7. In the embodiment shown in Figure 7, switches 44a and 54a are provided in the circuit supplying the brushes 52 which contact the slip-rings 40, 50. In normal superconducting operation, the switch 44a is closed and the switch 54a is open. Thus, as before, the conventional winding 55 is not connected electrically to the excitation system during normal operation. When a fault in the superconducting winding 15 occurs, the switch 44a is opened and the switch 54a is closed so that current is supplied through the slip ring 50 to the conventional winding 55, while the superconducting winding 15 is disconnected In this example, the connection and disconnection is made outside the cryogenic region of the rotor 10, in order to facilitate operation. In the variants of Figures 8 and 9, one end of the conventional winding is connected to the superconducting field winding 15 at all times; the other end is connected to a separate slip ring 50a, which is connected and disconnected using a switch 54 as above. In the event of a fault in the superconducting winding 15, the unconnected end of the conventional winding is connected to the field excitation system in parallel with the superconducting winding 15 (Figure 9) or using a separate slip ring 50a, as shown in Figure 8. The skilled person will appreciate that it is possible to place the switch 54 shown in Figure 8 at a remote location away from the rotor.

Thus, in the embodiments described above, when current is supplied to the conventional winding it may flow through either (a) the superconducting winding's slip-rings or (b) one or two of the conventional winding's own slip-rings.

In a third type of embodiment, shown in Figure 10, the conventional winding 55 is connected in parallel with the superconducting winding 15 at all times. Instead of a switch, a diode 60 is inserted into the conventional winding circuit so that, when a voltage of the appropriate polarity is applied across the (un-faulted) superconducting winding 15, as occurs during load changes for instance, there is no current flow in the conventional winding. However, the conventional winding 55 may absorb the magnetic field energy in the event of a loss of field current supply, and thus replace the dump resistor commonly used in superconducting machines.

In the event of failure of the superconducting winding 15, the polarity of the direct-current (DC) field current supply or excitation system to the rotor 10 is reversed in order to drive (steady-state) current through the conventional winding 55. Again, this reversal is carried out either manually or by a monitoring circuit, once the fault is detected. Diode 61 is included for intermittent faults where no current flows through the superconducting winding 15 and when voltage is reversed to drive current through the conventional winding 55.

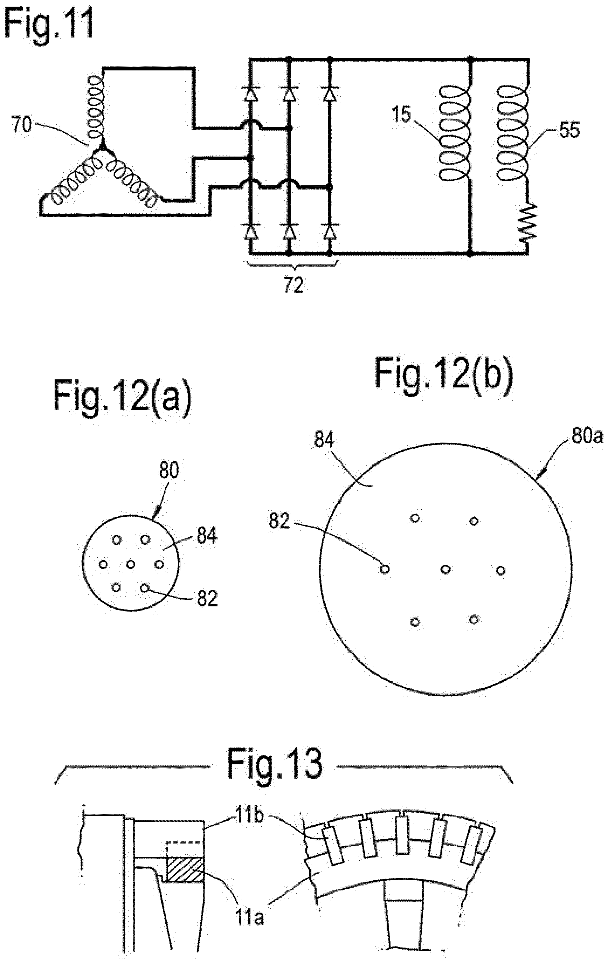

In the embodiment of Figure 11, brushless excitation is used. The conventional winding 55 is connected in parallel with the superconducting winding 15 at all times, because it is difficult to insert a switch. Here a brushless excitation using an exciter rotor winding 70 is applied. This exciter rotor generates a voltage arising from a DC electromagnet on the stator, and supplies it to the superconducting winding 15 via a diode rectifier bridge 72. In this case, as the excitation is changed the conventional winding will take a proportion of the field current. The resistive losses in the conventional winding 55 will cause heating, which leads to a marginally increased cooling requirement. Figure 11 also shows, for illustrative purposes, the equivalent resistance of the conventional winding 55. It will be appreciated that although the current flow in the conventional winding will occur predominantly during changes in excitation, there will likely be a small amount of parasitic AC current in the conventional winding at all times due to the high inductance of the superconducting winding and the voltage ripple created by the rectifier.

If the superconducting winding 15 ceases to be superconductive, for example during a quench or partial quench, the conventional winding 55 will offer an alternative path for the current previously flowing in the superconducting winding 15. This effect serves to minimise overheating of and possible damage to the superconducting winding 15. In this case, the conventional winding 55 replaces the dump resistor.

By way of example, based on any of the variants described above, the conventional winding 55 may carry 10% of the current carried by the superconducting winding in normal operation. As a general approximation, this will provide 30% of the rated speed of a propeller driven vessel.

In the embodiments described, the conventional winding 55 has been described and illustrated as a wire separate from that of the superconducting winding 15. Superconducting wires or conductors 80 typically consist of filaments 82 of superconducting material embedded within a matrix 84 of non-superconducting metal such as copper, as shown schematically in Figure 12(a). One purpose of the copper matrix 84 is to act as a diversion for the current in the event of a loss of superconducting properties by the superconducting filaments 82. Typically, the ratio of copper to superconductor in these known superconducting wires is in the range of between 17:1 and 1.35:1 depending on the type of conductor used and the technique used to achieve cryostatic stability.

The superconducting wire 80a may be designed, as shown in Figure 12(b), to have a larger quantity of copper 84 in its cross-section than in the conventional superconducting wires described in relation to Figure 12a.. The additional copper therefore functions as a parallel non-superconducting winding already built into the system. Thus the superconducting filaments 82 would be at a lower density per unit area than in the variant of Figure 12(a) such that the non-superconducting material 84 can be used as a current path for the reversionary mode and steady state operation of the machine in the event of problems with the current-carrying capability of the superconducting filaments 82. In this regard, the ratio of copper to superconductor may be in the range between approximately 20:1 and 200:1.0

When the superconductor is operating in its un-faulted condition, the increased copper area will also provide increased protection against the occurrence of quenches; the better protection is due to the reduced heat generation per unit volume which arises from lower current density in the copper adjacent to a section of quenched superconductor.

The machines described previously are synchronous machines. Instead of a separate conventional winding connected in parallel with the superconducting winding, in a further embodiment, a modified induction motor cage is built into the outer surface of the outer rotor 11; such a cage is easier to access and much closer to ambient temperature than the superconducting field winding 15. A part of such a cage is shown in Figure 13. The cage, which in ordinary induction machines consists of a cylinder of axial bars 11 b with an end ring 11 a permanently connected at each end, has instead a detachable end ring at one end so as to ensure that induction motor operation does not occur during un-faulted conditions. In the event of a failure of the superconducting field winding then the detachable end ring is connected electrically to the cage so as to make the machine operate as an induction motor.

It will be appreciated that, in the above described variants, with the exception of Figure 12, the conventional winding need not have the same number of turns as the superconducting winding. In order for the same excitation to be used, the conventional winding may be a single bar per slot whereas the superconducting winding will have several turns.

It will be appreciated that the heat generated by the resistance of the conventional winding 55 when current flows in it will serve to warm the rotor 10, so reducing the time taken for the rotor to reach a temperature at which it and the superconducting winding 15 can be inspected, dismantled and repaired or replaced.

While the present invention has been described in the context of a superconducting machine, the concept of having an additional parallel winding, i.e. one unconnected during normal operation, to provide a reversionary-mode capability is in principle applicable to the stator and/or rotor of any electrical machine.

## Claims

1. A superconducting electrical machine (1) including a rotor (10) and a stator (30), the rotor having electrically conductive windings at least one of which (15) is superconducting in normal operation, **characterized in that** the rotor (10) includes an additional normally-conducting winding (55) which is operable in a first, open-circuit, mode and a second, closed-circuit, mode whereby in the first mode the winding is not excited, and in the second mode the winding current sufficient to operate the machine can be passed through the additional winding if a fault occurs in the superconducting winding.

2. A superconducting electrical machine according to claim 1, in which the additional winding (55) is a winding of normally-conducting material running in parallel to the superconducting winding (15).

3. A superconducting electrical machine according to claim 2, in which the superconducting winding (15) and the additional winding (55) are two separate windings laid in parallel in the rotor (10).

4. A superconducting electrical machine according to claim 3, in which the two windings (15, 55) are supplied with current by respective slip rings (40; 50) on the rotor.

5. A superconducting electrical machine according to claim 3, in which the two windings (15, 55) are supplied with current by a common slip ring (40) on the rotor.

6. A superconducting electrical machine according to claim 4 or 5, further including switching means (44, 54) for selectively applying current to the superconducting winding (15) when it is functioning normally, and to the additional winding (55) when there is a fault in the superconducting winding.

7. A superconducting electrical machine according to claim 5, further including a rectifier (60) preventing current flowing though the additional winding (55) when the superconducting winding (15) is functioning normally, and allowing current to flow through the additional winding when there is a fault in the superconducting winding.

8. A superconducting electrical machine according to claim 2, in which the additional winding is in the form of normally-conducting material which surrounds at least one superconducting wire of the superconducting winding (80a), wherein the ratio of normally conducting material to superconducting material in the cross section is between approximately 20:1 and 200:1.

9. A superconducting electrical machine according to any one of the preceding claims, further including control means acting to detect a fault and to switch in the normally-conducting winding (55).

10. A superconducting electrical machine as claimed in claim 1, wherein the normally conducting winding includes an induction cage (11 a, 11 b).

11. A superconducting electrical machine according to claim 10, in which the induction cage (11 a, 11 b) comprises axial bars (11 b) and end rings (11 a), the end rings (11 a) being in electrical contact with the bars (11 b) in the second mode, and at least one of the end rings (11 a being out of electrical contact with the bars (11 b) in the first mode.

12. A superconducting electric motor constituted by a machine according to any preceding claim.

13. A watercraft powered by a motor according to claim 12.

14. A method of operating a superconducting electrical machine or motor according to any of claims 1 to 12, in which when a fault occurs, current is passed through the additional winding and operation of the machine is continued at reduced power.

15. A method according to claim 14, in which the machine or motor is a ship's engine and the operation at reduced power is used to maintain mobility of the ship while warming the cooled rotor

## Patentansprüche

1. Supraleitende elektrische Maschine (1), die einen Rotor (10) und einen Stator (30) aufweist, wobei der Rotor elektrisch leitfähige Wicklungen aufweist, von denen wenigstens eine (15) im normalen Betrieb supraleitend ist, **dadurch gekennzeichnet, dass**
der Rotor (10) eine zusätzliche, normal leitende Wicklung (55) aufweist, die in einem ersten Modus mit offenem Stromkreis und einem zweiten Modus mit geschlossenem Stromkreis betrieben werden kann, wobei die Wicklung in dem ersten Modus nicht erregt wird, und wobei in dem zweiten Modus der Wicklung Strom, der ausreicht um die Maschine zu betreiben, durch die zusätzliche Wicklung geleitet werden kann, wenn in der supraleitenden Wicklung ein Fehler auftritt.

2. Supraleitende elektrische Maschine nach Anspruch 1, wobei die zusätzliche Wicklung (55) eine Wicklung aus normal leitendem Material ist, die parallel zu der supraleitenden Wicklung (15) verläuft.

3. Supraleitende elektrische Maschine nach Anspruch 2, wobei die supraleitende Wicklung (15) und die zusätzliche Wicklung (55) zwei separate Wicklungen sind, die parallel in dem Rotor (10) verlegt sind.

4. Supraleitende elektrische Maschine nach Anspruch 3, wobei die zwei Wicklungen (15, 55) durch entsprechende Kollektoren (40; 50) an dem Rotor mit Strom versorgt werden.

5. Supraleitende elektrische Maschine nach Anspruch 3, wobei die zwei Wicklungen (15, 55) durch einen gemeinsamen Kollektor (40) an dem Rotor mit Strom versorgt werden.

6. Supraleitende elektrische Maschine nach Anspruch 4 oder 5, ferner mit einer Schalteinrichtung (44, 54) zum selektiven Zuführen von Strom an die supraleitende Wicklung (15), wenn deren Funktionsweise normal ist, und an die zusätzliche Wicklung (55), wenn in der supraleitenden Wicklung ein Fehler vorliegt.

7. Supraleitende elektrische Maschine nach Anspruch 5, ferner mit einem Gleichrichter (60), der es verhindert, dass Strom durch die zusätzliche Wicklung (55) fließt, wenn die supraleitende Wicklung (15) eine normale Funktionsweise aufweist, und der es ermöglicht, dass Strom durch die zusätzliche Wicklung fließt, wenn in der supraleitenden Wicklung ein Fehler vorliegt.

8. Supraleitende elektrische Maschine nach Anspruch 2, wobei die zusätzliche Wicklung in Form eines normal leitenden Materials vorliegt, das wenigstens einen supraleitenden Draht der supraleitenden Wicklung (80a) umgibt, wobei das Verhältnis des normal leitenden Materials zu dem supraleitenden Material im Querschnitt ungefähr 20:1 bis 200:1 beträgt.

9. Supraleitende elektrische Maschine nach einem der vorstehenden Ansprüche, ferner mit einer Steuereinrichtung zum Erkennen eines Fehlers und zum Umschalten in der normal leitenden Wicklung (55).

10. Supraleitende elektrische Maschine nach Anspruch 1, wobei die normal leitende Wicklung einen Induktionskäfig (11 a, 11 b) aufweist.

11. Supraleitende elektrische Maschine nach Anspruch nach Anspruch 10, wobei der Induktionskäfig (11 a, 11 b) axiale Stäbe (11) und Abschlussringe (11 a) umfasst, wobei sich die Abschlussringe (11a) in dem zweiten Modus in elektrischem Kontakt mit den Stäben (11 b) befinden, und wobei sich einer der Abschlussringe (11 a) in dem ersten Modus nicht in elektrischem Kontakt mit den Stäben (11 b) befindet.

12. Supraleitender elektrischer Motor, der durch eine Maschine nach einem der vorstehenden Ansprüche gebildet wird.

13. Wasserfahrzeug, das durch einen Motor nach Anspruch 12 betrieben wird.

14. Verfahren für den Betrieb einer supraleitenden elektrischen Maschine oder eines supraleitenden elektrischen Motors nach einem der Ansprüche 1 bis 12, wobei, wenn ein Fehle auftritt, Strom durch die zusätzliche Wicklung geleitet wird und der Betrieb der Maschine bei verminderter Leistung fortgesetzt wird.

15. Verfahren nach Anspruch 14, wobei die Maschine oder der Motor ein Motor eines Bootes ist, und wobei der Betrieb bei verminderter Leistung verwendet wird, um die Mobilität des Bootes während dem Aufwärmen des abgekühlten Rotors aufrechtzuerhalten.

## Revendications

1. Machine électrique supraconductrice (1) comprenant un rotor (10) et un stator (30), le rotor ayant des enroulements électroconducteurs dont un (15) au moins est supraconducteur en fonctionnement normal, **caractérisée en ce que** le rotor (10) comprend un enroulement normalement conducteur (55) supplémentaire qui peut fonctionner dans un premier mode à circuit ouvert et un second mode à circuit fermé, moyennant quoi, dans le premier mode, l'enroulement n'est pas excité, et dans le second mode, un courant d'enroulement suffisant pour faire fonctionner la machine peut passer par l'enroulement supplémentaire en cas de défaut dans l'enroulement supraconducteur.

2. Machine électrique supraconductrice selon la revendication 1, l'enroulement supplémentaire (55) étant un enroulement en un matériau normalement conducteur parallèle à l'enroulement supraconducteur (15).

3. Machine électrique supraconductrice selon la revendication 2, l'enroulement supraconducteur (15) et l'enroulement supplémentaire (55) étant deux enroulements séparés disposés en parallèle dans le rotor (10).

4. Machine électrique supraconductrice selon la revendication 3, les deux enroulements (15, 55) étant alimentés en courant par des bagues collectrices (40 ; 50) respectives sur le rotor.

5. Machine électrique supraconductrice selon la revendication 3, les deux enroulements (15, 55) étant alimentés en courant par une bague collectrice (40) commune sur le rotor.

6. Machine électrique supraconductrice selon la revendication 4 ou 5, comprenant en outre des moyens de commutation (44, 54) pour appliquer sélectivement du courant à l'enroulement supraconducteur (15) lorsqu'il fonctionne normalement, et à l'enroulement supplémentaire (55) en cas de défaut dans l'enroulement supraconducteur.

7. Machine électrique supraconductrice selon la revendication 5, comprenant en outre un redresseur (60) empêchant le courant de traverser l'enroulement supplémentaire (55) lorsque l'enroulement supraconducteur (15) fonctionne normalement, et permettant au courant de traverser l'enroulement supplémentaire en cas de défaut dans l'enroulement supraconducteur.

8. Machine électrique supraconductrice selon la revendication 2, l'enroulement supplémentaire étant sous la forme d'un matériau normalement conducteur qui entoure au moins un fil supraconducteur de l'enroulement supraconducteur (80a), le rapport du matériau normalement conducteur sur le matériau supraconducteur dans la section transversale étant compris entre environ 20:1 et 200:1.

9. Machine électrique supraconductrice selon l'une quelconque des précédentes revendications, comprenant en outre des moyens de commande agissant pour détecter un défaut et pour commuter l'enroulement normalement conducteur (55).

10. Machine électrique supraconductrice selon la revendication 1, l'enroulement normalement conducteur comprenant une cage à induction (11a, 11 b).

11. Machine électrique supraconductrice selon la revendication 10, la cage à induction (11 a, 11 b) comprenant des barres axiales (11 b) et des anneaux d'extrémité (11 a), les anneaux d'extrémité (11 a) étant en contact électrique avec les barres (11 b) dans le second mode et au moins l'un des anneaux d'extrémité (11 a) n'étant pas en contact électrique avec les barres (11 b) dans le premier mode.

12. Moteur électrique supraconducteur constitué par une machine selon l'une quelconque des revendications précédentes.

13. Embarcation propulsée par un moteur selon la revendication 12.

14. Procédé de fonctionnement d'une machine électrique supraconductrice ou d'un moteur selon l'une quelconque des revendications 1 à 12, en cas de défaut, du courant passant par l'enroulement supplémentaire et le fonctionnement de la machine se poursuivant à puissance réduite.

15. Procédé selon la revendication 14, la machine ou le moteur étant un moteur de navire et le fonctionnement à puissance réduite permettant de maintenir la mobilité du navire tout en chauffant le rotor refroidi.
